# EUROPEAN PATENT APPLICATION

(11) **EP 2 127 536 A1**
(43) Date of publication of application: **02.12.2009**
(21) Application number: 08720899.7
(22) Date of filing: 20.02.2008
(51) Int. Cl.: A23J 7/00, A23L 1/30, A61K 8/55, A61K 8/68, A61Q 19/00

(54) **PROCESS FOR PRODUCING FUNCTIONAL MATERIAL, THE FUNCTIONAL MATERIAL AND CONTINUOUS HEATING APPARATUS FOR OBTAINING THE SAME**

(30) Priority: 21.02.2007 JP 2007040395
(71) Applicant: Umeda Jimusho Ltd., Tokyo 151-0053 (JP); Institute of Rheological Function of Food Co., Ltd., Kasuya-gun, Fukuoka 811-2501 (JP)
(72) Inventor: NADACHI, Yoshitaka, Tokyo 158-0087 (JP); FUJINO, Takehiko, Fukuoka-shi Fukuoka 813-0043 (JP); OGASAWARA, Yukio, Hokuto-shi Hokkaido 041-1221 (JP)
(74) Representative: Albrecht, Thomas
(86) International application number: PCT/JP2008/053350
(87) International publication number: WO 2008/108236

(57) **Abstract**

A process for preparing a functional material by heat-treating a skin portion of poultry to carry out deoiling and defatting and to concentrate and pasteurize human-type sphingomyelin and plasmalogen-type glycerophospholipid contained in said skin portion, said heat-treatment comprising the steps of (A) continuously injecting hot water heated to 100°C or higher and/or steam into a heating chamber of a semi-sealed space having said temperature or higher, to generate water microdroplets and moist hot steam, (B) replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature range of 100 to 115°C, (C) injecting steam in a 100 % wet state to said gaseous water to stably form a composite heating medium composed of hot water, water microdroplets and steam, and (D) applying continuous amplitude heating including a temperature difference of at least 10°C to the skin portion of poultry with said composite heating medium in an atmosphere having a temperature of 100 to 115°C and an oxygen concentration of 0.2 % by volume or less.

## Description

### Technical Field

This invention relates to a process for preparing a functional material; a functional material; a continuous heat-treating apparatus for obtaining the same; and human-type sphingomyelin and plasmalogen-type glycerophospholipid that are isolated from the above functional material. More specifically, it relates to a process for preparing a functional material such as a heat-treated/pasteurized food material, which comprises efficiently heat-treating a skin portion of poultry, preferably chicken, to carry out deoiling/defatting, and thereby concentrating and pasteurizing human-type sphingomyelin and plasmalogen-type glycerophospholipid contained in the above skin portion; a functional material obtained by the above process; a continuous heat-treating apparatus for preparing the above functional material; and human-type sphingomyelin and plasmalogen-type glycerophospholipid which are isolated from the above functional material and useful as materials for foods, cosmetics, medicines, etc.

### Background Art

Lipid refers to a substance that has a long-chain fatty acid or similar hydrocarbon chain in a molecule and that is present in an organ or derived from a zoic organ. The lipid can be classified into simple lipid and complex lipid. The simple lipid is composed of C, H and O and is generally soluble in acetone, and triacylglycerol as a simple lipid is present as an energy reservoir in a fat tissue of an animal body. On the other hand, the complex lipid is a group of lipid containing P of phosphoric acid, N of a base, etc. Therefore, the complex lipid is composed of a hydrophobic part (fatty acid part) and a hydrophilic part (phosphoric acid and base parts) and exhibits amphophilic nature. Generally, the above simple lipid is soluble in acetone, while the complex lipid is insoluble in acetone. Such complex lipid is a constituent of a biomembrane.

The above complex lipid can be classified into (1) glycerophospholipid [which phosphatidylcholine (alias lecithin), phosphatidylethanolamine, etc., belong to], (2) sphingophospholipid (which sphingomyelin, ceramide ciliatine, etc., belong to), (3) sphingoglycolipid (which cerebroside, sulfatide, ganglioside, etc., belong to) and (4) glyceroglycolipid (which includes lipids in which various saccharides bond to diacyl glycerol existing in microrganisms or higher plant). The above (2) sphingophospholipid and (3) sphingoglycolipid are generically referred to as "sphingolipid".

The above glycerophospholipid is a generic term for lipids having glycerophosphoric acid backbone in their structure, and includes phosphatidylcholine (lecithin), phosphatidylethanolamine, diphosphatidylglycerol, etc. Many lipids belonging to this glycerophospholipid are those in which the non-polar portion is a fatty acid ester, while some are of a plasmalogen-type having a vinyl ether bond.

The above glycerophospholid is important as a constituent of biomembrane, and above all, the plasmalogen-type glycerophospholipid has high radical sensitivity by its vinyl-ether bond and is hence in recent years highlighted as a phospholipid having anti-oxidation nature. It is recently reported that the plasmalogen-type glycerophospholipid contributes to oxidation-stability of phospholipid membrane containing cholesterol through a mechanism different from the counterpart of α-tocopherol that is an anti-oxidation constituent of cell membrane (for example, see "J. Lipid Res.", Vol. 44, pages 164-171 (2003)). Further, it is also pointed out that the plasmalogen-type glycerophospholipid not only takes part in the oxidation resistance of cell membrane and lipoprotein, but also has an important role in the intellectual signaling system of cells (for example, see "J. Mol. Neurosci.", Vol. 16, pages 263-272; discussion pages 279-284 (2001)).

The above plasmalogen-type glycerophospholipid is expected to have the function of preventing the death of brain nerve cells in dementia. Under the circumstances, however, there is found no safe supply source that is safe and makes a large amount available.

On the other hand, the sphingolipid is a generic term for lipids having a long-chain base such as sphingosine, and it is composed mainly of sphingoglycolipid and sphingophospholipid as described already. The sphingoglycolipid contains a long-chain base such as sphingosine or fat sphingosine in addition to saccharide and long-chain fatty acid. The simplest sphingoglycolipid is cerebroside, and it includes sulfatide in which a sulfuric acid group is bonded thereto, ceramide oligohexoside in which several molecules of neutral saccharide are bonded, ganglioside in which sialic acid is bonded, etc. These lipids are present in cell cortex and are thought to take part in a recognitive mechanism.

The sphingophospholipid is classified into a derivative of ceramide 1-phosphoric acid and a derivative of ceramide 1-phosphonic acid. As the former, sphingomyelin is well known, and as the latter, ceramide ciliatine (ceramide aminoethylphosphonic acid).

These sphingolipids are spotlighted since it has been shown in recent years that ceramide, sphingosine, sphingosine-I-phosphoric acid, etc., which are decomposition metabolites thereof, take part in the intellectual signaling in cells. Further, the sphingolipids take part in the formation of a membrane microdomain called "raft" together with cholesterol, etc., and it has been shown that this microdomain plays an important role as a site of intellectual signaling, so that more and more attention has been paid thereto.

These sphingolipids have been conventionally extracted from cow brains and utilized, while those which are derived from cereals or fungi are now used from a safety standpoint. Since, however, sphingoid bases constituting sphingolipids derived from cereals or fungi differ from those of mammals, there is a problem that their utility in organisms is low as compared with human-type sphingolipids.

Meanwhile, it is known that phospholipids of poultry, in particular chicken skin, contain much human-type sphingomyelin and plasmalogen-type glycerophospholipid.

Therefore, a product obtained by heat-treating a skin portion of poultry such as chicken skin, etc., to remove an unnecessary portion, concentrating human-type sphingomyelin and plasmalogen-type glycerophospholipid and pasteurizing them is useful as a functional material for heated/pasteurized food materials, etc.

### Disclosure of the Invention

Under the circumstances, it is an object of this invention to provide a process for preparing a functional material such as heated/pasteurized food material, which comprises efficiently heat-treating a skin portion of poultry, preferably chicken, to carry out deoiling and defatting and to concentrate and pasteurize human-type sphingomyelin and plasmalogen-type glycerophospholipid contained in the above skin portion; a functional material obtained by the above method; a continuous heat-treating apparatus for producing the above functional material; and human-type sphingomyelin and plasmalogen-type glycerophospholipid which are isolated from the above functional material and useful as a material for foods, cosmetics, medicines, etc.

### Means to Solve the Problems

For achieving the above object, the present inventors have made diligent studies and as a result have found that the intended functional material can be efficiently obtained by employing means including specific steps as a method of heat-treating the skin portion of poultry, and on the basis of this finding, the present invention has been completed.

That is, this invention provides
(1) a process for preparing a functional material by heat-treating a skin portion of poultry to carry out deoiling and defatting and to concentrate and pasteurize human-type sphingomyelin and plasmalogen-type glycerophospholipid contained in said skin portion, said heat-treatment comprising the steps of
   (A) continuously injecting hot water heated to 100°C or higher and/or steam into a heating chamber of a semi-sealed space having said temperature or higher, to generate water microdroplets and moist hot steam,
   (B) replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature range of 100 to 115°C,
   (C) injecting steam in a 100 % wet state to said gaseous water to stably form a composite heating medium composed of hot water, water microdroplets and steam, and
   (D) applying continuous amplitude heating including a temperature difference of at least 10°C to the skin portion of poultry with said composite heating medium in an atmosphere having a temperature of 100 to 115°C and an oxygen concentration of 0.2 % by volume or less,
(2) a preparation process as recited in the above (1), wherein the poultry is chicken,
(3) a preparation process as recited in the above (1) or (2), wherein the functional material is a heated pasteurized food,
(4) a functional material obtained by the process recited in any one of the above (1) to (3),
(5) a continuous heat-treating apparatus which is an apparatus for preparing the functional material recited in the above (4) and comprises
   (i) means of continuously injecting hot water heated to 100°C or higher and/or steam into a heating chamber of a semi-sealed space having said temperature or higher, to generate water microdroplets and moist hot steam,
   (ii) means of replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature region of 100 to 115°C,
   (iii) means of injecting steam in a 100 % wet state to said gaseous water to stably form a composite heating medium composed of hot water, water microdroplets and steam, and
   (iv) means of applying continuous amplitude heating including a temperature difference of at least 10°C to the skin portion of poultry with said composite heating medium in an atmosphere having a temperature of 100 to 115°C and an oxygen concentration of 0.2 % by volume,
(6) human-type sphingomyelin isolated from the functional material recited in the above (4), and
(7) plasmalogen-type glycerophospholipid isolated from the functional material recited in the above (4).

### Effect of the Invention

According to this invention, there can be provided a process for preparing a functional material such as a heat-treated/pasteurized food material, which comprises efficiently heat-treating a skin portion of poultry, preferably chicken, to carry out deoiling/defatting, and concentrating and pasteurizing human-type sphingomyelin and plasmalogen-type glycerophospholipid contained in the above skin portion; a functional material obtained by the above process; a continuous heat-treating apparatus for preparing the above functional material; and human-type sphingomyelin and plasmalogen-type glycerophospholipid which are isolated from the above functional material and useful as materials for foods, cosmetics, medicines, etc.

### Brief Description of Drawings

Fig. 1 is a graph showing a relationship between a heating condition with hi-LOHS-R and a weight loss ratio in Example 1.
Fig. 2 is a graph showing the total lipids content of chicken skin heated with hi-LOHS-R in Example 1.
Fig. 3 is a graph showing a relationship between heating conditions with hi-LOHS-R and a deoiling/defatting ratio in Example 1.
Fig.4 is a graph showing a relationship between heating conditions with hi-LOHS-R and a concentration ratio of complex lipid in Example 1.
Fig. 5 is a graph showing a relationship between the number of times of heating repeated and an average heating weight loss ratio in Example 1.
Fig. 6 is a flow chart for obtaining complex lipid from deoiled/defatted skin in Example 1.
Fig. 7 shows drawings of results of TLC and HPLC of a complex lipid fraction in Example 1.
Fig. 8 is a flow chart for preparing crude sphingomyelin and crude plasmalogen from deoiled/defatted chicken skin in Example 1.
Fig. 9 is an ELSD detection chromatogram of crude sphingomyelin and crude plasmalogen in Example 1.
Fig. 10 shows photographs of an apparatus at the end of heating and the apparatus at the end of showering in Example 1.
Fig. 11 is a graph showing a relationship between a heating temperature and green skin minced product in Example 2.
Fig. 12 is a graph showing a relationship between the form of a raw material and a heating weight loss in Example 2.
Fig. 13 is a graph showing a relationship between the form of green skin as a raw material and a heating weight loss in Example 2.
Fig. 14 is a graph showing the results of repetitive test I using a raw material of the same lot in Example 2.
Fig. 15 is a graph showing the results of repetitive test II using a raw material of the same lot in Example 2.
Fig. 16 is a graph showing the results of repetitive test III using a raw material of the same lot in Example 2.
Fig. 17 is the specification of a practical machine of a hi-LOHS-R prototype apparatus (4 kg/hour) used in Examples 1 and 2.

### Preferred Embodiments of the Invention

First, the process for preparing a functional material, provided by this invention, will be explained.

The process for preparing a functional material, provided by this invention, is a process for preparing a functional material by heat-treating a skin portion of poultry to carry out deoiling and defatting and to concentrate and pasteurize human-type sphingomyelin and plasmalogen-type glycerophospholipid contained in said skin portion, and the above heat-treatment employs means including the following steps (A) to (D).

In this invention, "composite heating medium" (to be sometimes referred to as "h-AQG" hereinafter) composed of hot water, water microdroplets and steam refers to a mixture system of hot water and high-humidity moist hot steam generated from steam in a 100 % wet state and water microdroplets locally generated by condensation thereof, and dry hot steam means highly dry steam locally generated by drying of the above moist hot steam.

### [Steps (A), (B) and (C)]

In this invention, the step (A) is the step of continuously injecting hot water heated to 100°C or higher and/or steam into a heating chamber of a semi-sealed space having said temperature or higher, to generate water microdroplets and moist hot steam, and the step (B) is the step of replacing air in the above heating chamber with the above water microdroplets and moist hot steam, to fill a gas component (gaseous water) that has a composition having a relative humidity of 95 % or more and an oxygen concentration of 0.2 % by volume or less and that is maintained in a temperature region of 100 to 115°C.

Further, the step (C) is the step of injecting steam in a 100 % wet state to the above gaseous water to stably form a composite heating medium composed of hot water, water microdroplets and steam.

In this invention, the above heating chamber is constituted of a predetermined semi-sealed space in which an object to be treated can be heated while the outer air is blocked off. The heating chamber includes, for example, a semi-sealed space having a plate on which an object to be treated is placed and an openable/closable door portion having a glass window portion partly. The heating chamber is preferably formed of a stainless steel material. In this invention, the temperature of the above heating chamber is increased to a predetermined temperature of over 100°C, and in this case, it is preferably increased to a temperature of the hot water and steam or higher.

In this invention, the temperature of the heating chamber is increased to a predetermined temperature as described above, and hot water, water microdroplets and steam are also generated in the heating chamber, and air in the heating chamber is replaced with h-AQG. In this case, the above hot water, water microdroplets and the steam are generated, for example, by sending water through a small tube at a predetermined flow rate, heating the water with a heater from outside the small tube and introducing the water into the heating chamber through a nozzle provided at the end of the small tube. The above hot water, water microdroplets and steam are a component formed by a mixture of high-temperature normal-pressure hot water and gas heated to 100 to 115°C, and have an action of heating an object to be treated at high energy efficiency. The heated water is sprayed and injected into the heating chamber through the nozzle. The heating chamber is internally temperature-controlled so as to have a temperature of 100 to 115°C in a normal-pressure state, and the sprayed water drops are vaporized to produce a state in which hot water, water microdroplets and steam are mixed in the heating chamber. In this case, the amount of water that is sprayed and the diameter of water drops are adjusted, whereby there can be produced a state where water microdroplets are partially mixed with a steam atmosphere. This state is called AQUAGAS, and steam in a 100 % wet state is sprayed thereto to form hot water, and there is formed "composite heating medium" composed of hot water, water microdroplets and steam (to be referred to as hybrid type AQUAGAS (trade name, "h-AQG" hereinafter)).

In this invention, water in a water-feed tank is pumped with a water-feed pump, supplied to a steam generating thermal storage panel through a conduit formed of a small tube, and heated to a predetermined temperature with a heater, and hot water and/or steam are/is injected directly from a steam ejection nozzle provided at the forward end of the small tube at a high velocity. In this case, any steam nozzle can be used so long as it has fine ejection hole(s) formed at a forward end and has the function of bringing hot water and/or steam into a fine state and injecting them. The diameter of fine ejection holes, the number thereof, the position where they are made through, etc., can be determined as required. The injection speed of hot water and/or steam from the steam ejection nozzle is preferably approximately 160 to 200/s at an ejection nozzle forward end, while it shall not be limited thereto and can be determined as required, for example, by changing the diameter and number of the holes of the fine ejection holes depending upon the size of an apparatus, the kind, the use object, etc.

In this invention, for example, steam ejected from the above fine ejection nozzle is introduced into the heating chamber. In this case, steam is injected to a circulating fan placed in the vicinity of the forward end of the ejection nozzle, to transfer h-AQG in the predetermined air direction by an impact force and gas pressure based on the circulating fan, and also to bring h-AQG into contact with a heater placed in agreement with the air direction thereof, whereby h-AQG is introduced into the entire heating chamber without decreasing its temperature, h-AQG maintained at a predetermined temperature is substituted in the heating chamber, and the heating chamber is filled with a hot water/gas component having a relative humidity of 95 % or more and an oxygen concentration of 0.2 % by volume or less, more preferably a relative humidity of 99.0 % or more and an oxygen concentration of 0.2 % by weight or less, whereby an atmosphere of h-AQG can be formed in the heating chamber. The hot water and/or steam injected from the fine ejection holes collide with the circulating fan so that they because finer. Further, the heater to be placed on the lee side of the air direction formed by the circulating fan is arranged in a position and the direction in which its surface contacts the hot water and/or steam directly and a larger area of the surface contacts the hot water and/or steam. In this manner, the heat by the heater is efficiently transmitted to the hot water and/or steam injected, so that a decrease in the temperature of the hot water and/or steam injected can be reliably prevented.

The above circulating fan includes, for example, a fan that is placed in the center of a rear surface side in the heating chamber and that has the function of transferring injected hot water and/or steam such that the hot water and/or steam are/is brought into contact directly with heaters placed in ducts positioned on the left side surface and right side surface portions of the heating chamber, while it shall not be limited thereto. Further, the above heater preferably includes, for example, a heater consisting of a number of sheathed heaters, etc., that are arranged in the form of a hairpin so that its contact area to the hot water and/or steam is increased, while it shall not be limited thereto, and any heater can be similarly used so long as it has a similar function. The number of turning and the turning direction of the above circulating fan are determined to ensure that-the injected hot water and/or steam can circulate as a circulating gas in the duct by taking account of the size of an apparatus, the position and form of the duct, the form of the heater, the position of placement, etc.

### [Step (D)]

The step (D) is the step of applying continuous amplitude heating including a temperature difference of at least 10°C to the skin portion of poultry with the above composite heating medium in an atmosphere having a temperature of 100 to 115°C and an oxygen concentration of 0.2 % by volume or less.

In the above step (D), an object to be treated is heat-treated with the above hot water, water microdroplets and steam in a temperature range of 100 to 115°C by applying continuous amplitude heating including a temperature difference of at least 10°C to the object. The above "continuous amplitude heating including a temperature difference of at least 10°C" means that heating is continuously carried out at an amplitude of a temperature changing in a temperature range of 100 to 115°C by over 10°C for a short period of time.

At the state when the substitution of h-AQG in the heating chamber is completed, an object to be treated is introduced into the heating chamber, and predetermined heat treatment is carried out with the above h-AQG as a heating medium.

After the object to be treated is heat-treated as predetermined, it is transferred out of the heating chamber as timely as required, and h-AQG that has come in contact with the object is discharged out of the system through an h-AQG discharge port. The hot water and/or steam injected into the heating chamber collide(s) first with the circulating fan to be finer, are/is transferred to the duct, come(s) in contact with the heater in the duct to be heated to a predetermined temperature, then, come(s) in contact with the object introduced in the heating chamber to be used as a heating medium and then discharged out of the system. The thermal energy of h-AQG as a heating medium is used as a heat source for heat-treating the object to be treated. In this invention, the hot water and/or steam injected do/does not directly come in contact with the object to be treated, but after heated with the heater placed in the duct, the hot water and/or steam come in contact with the object to be treated, and heat(s) the object without decreasing the amount of heat thereof, so that the object can be efficiently heated.

The hot water and/or steam injected collide(s) with the circulating fan at a high velocity, and water drops are divided to be far finer due to an impact by the collision, and further, they are heated with the heater. This finer high-temperature gaseous water is composed of high-temperature water particles that are megascopically completely transparent, and is highly capable of permeating the object to be treated. Gaseous water that has once permeated the object to be treated and has performed heat exchange is followed by high-temperature gaseous water that supplies thermal energy, and thermal energy is constantly supplied in this manner. Heat having a high thermal conductivity continuously moves toward an inside, and gaseous water efficiently penetrates the object to be treated, so that the object to be treated can be heated for a short period of time. Further, since the heating chamber is filled with a large amount of hot water generated from steam injected in a 100 % wet state concurrently, the internal surface of the chamber is constantly covered with hot water. As a result, the adherence of a flying heat treatment byproduct to the internal surface of the chamber can be prevented, and in particular, the formation of a film obtained by high-temperature denaturing of what adheres to the heater surface can be inhibited.

In this invention, water drops of the above hot water and/or steam injected collide with the circulating fan as required to become finer further, and they fill the heating chamber in the form of biocidal fine water particles having a surface activity. An experimental result has shown that water sampled from a water-feed tank has a pH of approximately 6.9 to 7.1 but that the surface-active biocidal fine water particles have a pH of approximately 8.5 to 9.8. Together with the high-temperature condition of 100°C or higher, not only they form a highly biocidal h-AQG atmosphere in the heating chamber, but the economic removal of a heated byproduct that is said to be impossible in prior art can be made concurrently with the heat treatment.

The skin portion of poultry, preferably chicken, is heat-treated by employing means including the above steps (A) to (D), whereby deoiling and defatting are effectively carried out. Hence, human-type sphingomyelin and plasmalogen-type glycerophospholipid contained in the above skin portion are not only concentrated, but also pasteurized, whereby a functional material can be efficiently prepared.

The functional material prepared by the process of this invention contains concentrated human-type sphingomyelin and plasmalogen-type glycerophospholipid, and when the poultry is chicken, normally, the content of the former is approximately 0.3 to 0.8 mass%, and the content of the latter is approximately 0.5 to 1.2 mass%. It can be used as a heated pasteurized food material, etc.

Further, this invention also provides a functional material obtained by the above process of this invention, and it also provides a continuous heat-treating apparatus for preparing the above functional material.

The continuous heat-treating apparatus of this invention is an apparatus for heat-treating a skin of poultry to carry out deoiling and defatting and preparing a functional material by concentrating and pasteurizing human-type sphingomyelin and plasmalogen-type glycerophospholipid contained in the above skin portion, and it has
(1) means of continuously injecting hot water heated to 100°C or higher and/or steam into a heating chamber of a semi-sealed space having said temperature or higher, to generate water microdroplets and moist hot steam,
(2) means of replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature region of 100 to 115°C,
(3) means of injecting steam in a 100 % wet state to said gaseous water to stably form a composite heating medium composed of hot water, water microdroplets and steam, and
(4) means of applying continuous amplitude heating including a temperature difference of at least 10°C to the skin portion of poultry with said composite heating medium in an atmosphere having a temperature of 100 to 115°C and an oxygen concentration of 0.2 % by volume.

The human-type sphingomyelin and plasmalogen-type glycerophospholipid of this invention will be explained below.

The human-type sphingomyelin and plasmalogen-type glycerophospholipid of this invention are isolated from the above functional material of this invention, and can be prepared, for example, by applying the following steps (a), (b), (c) and (d).

### [Step (a)]

The step (a) is a step in which total lipids are extracted from the above functional material by using a solvent and dried to obtain dry total lipids.
As a solvent for extracting the total lipids, a solvent that is safe in food sanitation and also excellent in extraction efficiency is used. As this solvent, ethanol is particularly suitable. This extraction treatment can be carried out according to a conventional method. In this extracting step, however, non-lipid components soluble in ethanol are also extracted.

The dry total lipids can be obtained according to a conventional method by distilling off a solvent by means of a rotary evaporator, etc., or introducing nitrogen gas.

### [Step (b)]

This step (b) is a step in which the dry total lipids obtained in the above step (a) are subjected to extraction treatment with a solvent mixture of an aliphatic hydrocarbon solvent and a water-soluble ketone solvent to separate them into an insoluble portion composed mainly of sphingomyelin (to be sometimes referred to as "crude sphingomyelin" hereinafter) and a soluble portion.

Examples of the aliphatic hydrocarbon solvent as one component in the solvent mixture that is used for the extraction treatment of the dry total lipids include n-pentane, isopentane, n-hexane, isohexane, n-heptane, isoheptane, cyclopentane, cyclohexane, etc., and these may be used singly or as a mixture of two or more of them. Of these, n-hexane is suitable.

As the water-soluble ketone solvent that is the other component of the above solvent mixture, for example, acetone and/or methyl ethyl ketone may be used. Of these, acetone is suitable.

When a mixture of n-hexane and acetone is used as a solvent mixture, the amount ratio thereof by volume is preferably 4:6 to 6:4, more preferably 4.5:5.5 to 5.5:4.5.

Further, the amount of the solvent mixture for use is normally approximately 10 to 30 ml per gram of the dry total lipids. When the above amount of the solvent mixture is less than 10 mL, the extraction treatment cannot be fully carried out, and the purity and yield of sphingomyelin in the insoluble portion may be decreased. When it exceeds 30 mL, there may not be produced any further effect on improvements of the purity and yield of sphingomyelin in proportion to that amount. The amount of the solvent mixture for use per gram of the dry total lipids is preferably 15 to 25 mL. The extraction treatment can be carried out according to a conventional method.

The liquid obtained after extraction treatment can be separated by centrifugal treatment into a soluble portion and an insoluble portion composed mainly of sphingomyelin.

### [Step (c)]

The step (c) is a step in which the insoluble portion composed mainly of sphingomyelin, obtained in the above step (b), is subjected to extraction-treatment with a solvent mixture of water and a water-soluble ketone solvent to remove a non-lipid component contained in the soluble portion.

The purity of crude sphingomyelin in the insoluble portion composed mainly of sphingomyelin, obtained in the above step (b), is normally 40 mass% or more. In this crude sphingomyelin, normally, 6 mass% or less of phosphatidylcholine is included besides sphingomyelin, while other phospholipids are hardly contained.

The water-soluble ketone solvent in the step (c) is preferably acetone, and when water and acetone are used as a solvent mixture, the volume ratio thereof is preferably 3:7 to 7:3, more preferably 5:5. Further, the amount of the solvent mixture per gram of the dry product from the insoluble portion composed mainly of sphingomyelin, obtained in the step (b), is approximately 10 to 30 mL.

The liquid obtained after extraction treatment can be separated by centrifugal treatment into a soluble portion and an insoluble portion composed mainly of sphingomyelin. Then, water remaining in the insoluble portion can be removed by acetone treatment. The resultant crude sphingomyelin normally has a purity of 70 mass% or more. In this crude sphingomyelin, normally, 12 mass% or less of phosphatidylcholine is included besides sphingomyelin, while other phospholipids are hardly contained.

### [Step (d)]

The step (d) is a step in which the soluble portion obtained in the above step (b) is dried, and the thus-obtained dry portion is subjected to extraction treatment with a water-soluble ketone solvent to separate and recover an insoluble portion composed mainly of plasmalogen-type glycerophospholipid (to be sometimes referred to as "crude plasmalogen-type glycerophospholipid" hereinafter).

In this step (d), first, the soluble portion obtained in the above step (b) is dried according to a conventional method. For example, there may be employed a method in which the solvent mixture in the above soluble portion is distilled off by means of a rotary evaporator. Then, the thus-obtained dry product is subjected to extraction treatment with a water-soluble ketone solvent according to a conventional method. As the water-soluble ketone solvent used in this case, acetone and/or methyl ethyl ketone can be employed, and acetone is preferred.

When acetone is used as an extraction solvent, its amount per gram of the dry product is normally approximately 10 to 30 mL. When the amount thereof in use is less than 10 mL, no sufficient extraction treatment can be carried out, which may lead to a decrease in the purity and the yield of plasmalogen-type glycerophospholipid in the insoluble portion. When it exceeds 30 mL, there is not produced any further effect on improvements of the purity and yield of plasmalogen-type glycerophospholipid in proportion to that amount. The amount of the solvent per gram of the dry product is 15 to 25 mL.

The liquid obtained after extraction treatment can be separated by centrifugal treatment to a soluble portion and an insoluble portion composed mainly of plasmalogen-type glycerophospholipid (crude plasmalogen-type glycerophospholipid). The amount of plasmalogen-type glycerophospholipid in the insoluble portion is normally 40 mass % or more.

According to the above process, sphingomyelin and plasmalogen-type glycerophospholipid having high purity each can be produced from total lipids of the above functional material at high yields by simple means.

According to the above process, normally, approximately 0.1 to 0.2 mass% of crude sphingomyelin and approximately 0.6 to 0.8 mass% of crude plasmalogen-type glycerophospholipid can be obtained from the above functional material.

Sphingomyelin includes a phosphoric diester bond formed by a primary-alcoholic hydroxyl group of ceramide and choline phosphoric acid, has a structure of the following formula (I), 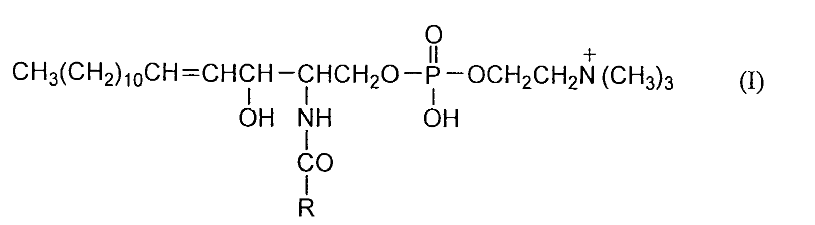 (wherein R-CO is a fatty acid residue)
and normally is present widely not only in brain tissues but also in organ tissues.

Since most of sphingoid bases constituting the sphingomyelin derived from chicken skin, obtained by the above process, is 4-trans-sphingenin (sphingosine), this sphingomyelin is a human-type sphingomyelin having high bioavailability.

It has been reported that sphingomyelin as ceramide, sphingosin, sphingosin-1-phosphoric acid, etc., which are metabolites produced by decomposition thereof, participates in intellectual signaling in lipids, and it has been also revealed that sphingomyelin participates in the formation of a membrane microdomain called "raft", and that the microdomain performs an important role as an intellectual signaling site. Further, sphingomyelin is expected to produce a skin moisture-retaining effect, an effect of preventing a cancer of a large intestine, and the like.

The crude plasmalogen-type glycerophospholipid obtained by the above process mainly contains phosphatidylethanolamine (PE) and partially contains phosphatidylcholine (PC). Approximately 80 mass% of the above PE is of a plasmalogen-type, and PC contains approximately 30 mass% of a plasmalogen-type.

The following formulae (II) and (III) show structures of diacyl type glycerophospholipid and plasmalogen-type glycerophospholipid, respectively. 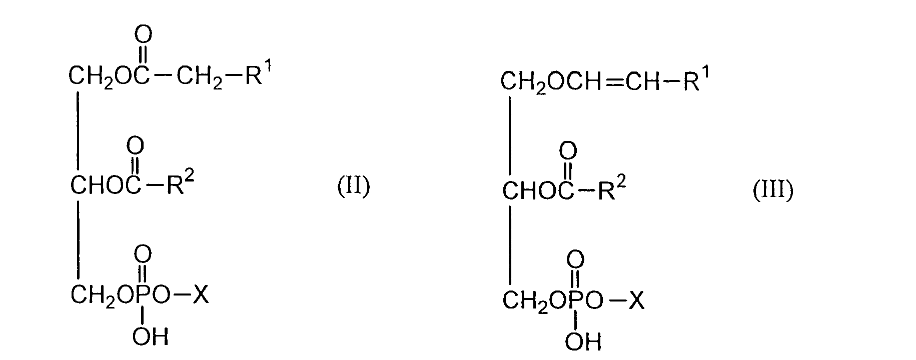 R¹, R² = long-chain fatty acid group.

X=-CH₂CH₂NH₂,

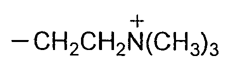

Generally, glycerophospholipid (lecithin) has an ester bond with a fatty acid acyl group in sn-1 (1 position) of glycerol as shown in the formula (II), while a plasmalogen-type has a vinyl ether bond having an alkenyl group in sn-1 of glycerol as shown in the formula (III).

When X is an aminoethyl group, it is a phosphatidylethanolamine, and when X is a trimethylaminoethyl group, it is phosphatidylcholine.

The above plasmalogen-type glycerophospholipid attracts attention as an oxidation-resisting phospholipid since its vinyl ether bond has high radical sensitivity, and it is known that it contributes to oxidation stability of a phospholipid membrane containing cholesterol. Further, it has been pointed out that the plasmalogen-type glycerophospholipid not only takes part in the oxidation resistance of cell membrane and lipoprotein but also plays an important role in the intellectual signaling system of cells. The above plasmalogen-type glycerophospholipid is expected to work to prevent the neurocyte death of a brain in dementia or have an effect on the prevention of the crisis of atherosclerosis.

### Examples

This invention will be explained more in detail with reference to Examples hereinafter, while this invention shall not be limited by these Examples.

In Table and drawings, "%" stands for "mass%", and in drawings, "m." stands for "minute".

### Example 1

### (1) Preparation of raw material

### (a) Chilled green skin of culled hen (adult hen)

Giblets-removed poultry which was easily available from the step of adult hen processing of laying hens that were one typical species of poultry, preferably "hot poultry" (supplied by Noji Kumiai Houjin, Enu Chicken (Chiran-cho, Kagoshima Prefecture)) was used. A back skin of poultry was cut in, and a skin was peeled off by pulling it to both sides and vacuum-packed with a high-barrier packaging material. Then, it was cold-stored to prepare chilled green skin.

### (b) Preparation of minced chilled green skin of culled hen (adult hen)

Refrigeration→tempering→vacuuming →refrigeration which were a normal minced product preparation method were carried out with regard to the above-prepared chilled green skin according to a method in which chilled green skin was minced with a commercially available mincing machine and then vacuum-packed and refrigerated for inhibiting refrigerative alteration. The size of minced product was 4 mm to 12 mm, and is preferably 6 to 10 mm.

### (2) Deoiling/defatting test using chilled green skin of culled hen (adult hen)

A deoiling/defatting test using 6.8 kg of chilled green skin of culled hens (adult hens) was carried out as follows.

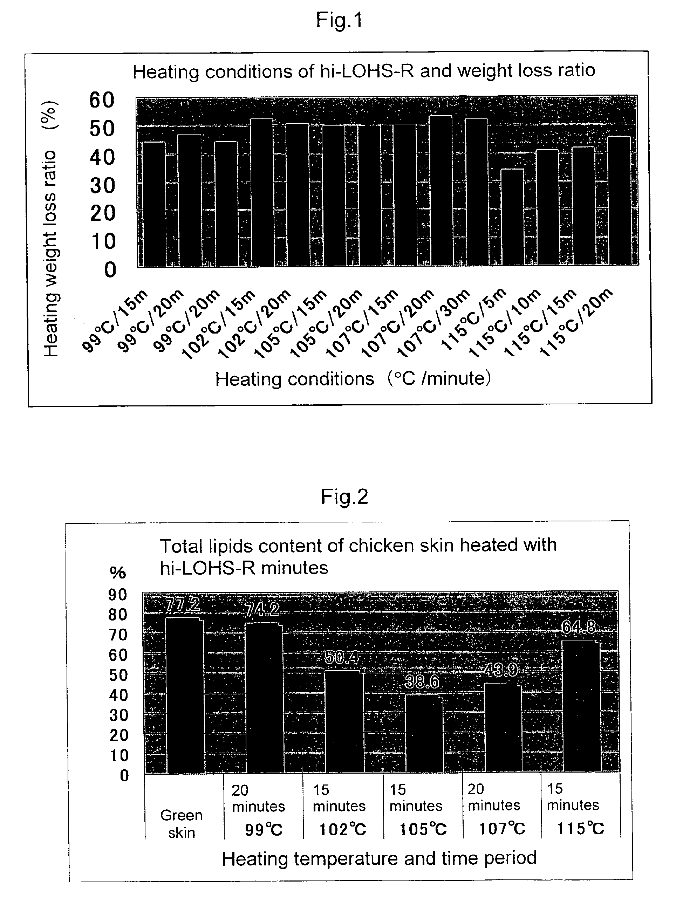

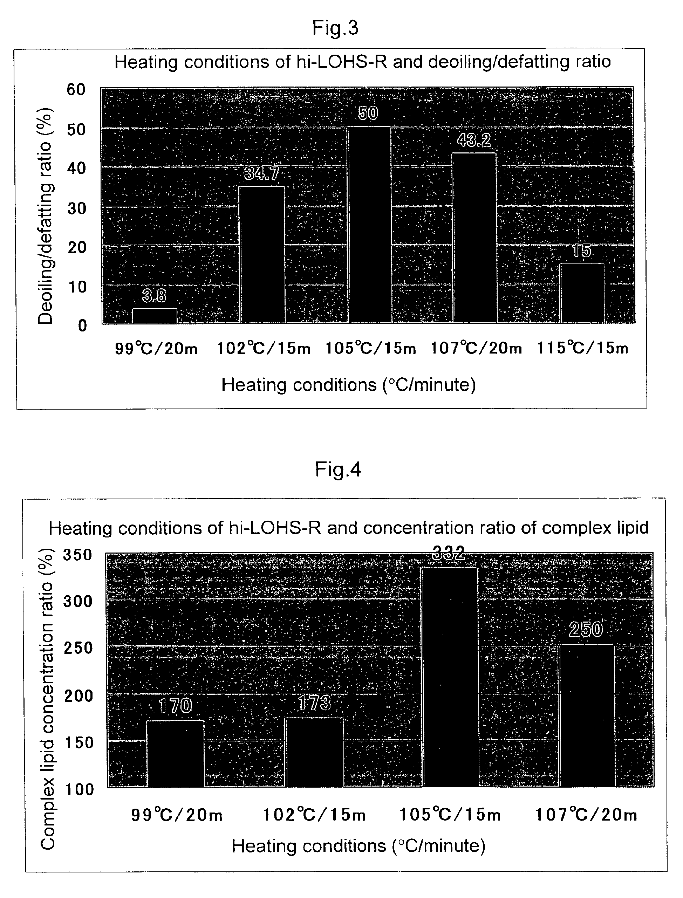

With an apparatus (to be sometimes referred to as "hi-LOHS-R" hereinafter) having a rotating heating tray (with narrow-metal-wire semispherical cage), prepared by partially remodeling an apparatus (supplied by TAIYO SEISAKUSHO Co., Ltd.) used in this invention, the setting of optimum conditions for deoiling/defatting was studied by measuring heat loss weights and total lipids loss weights while changing heating temperatures and heating time periods. The results are summarized in Table 1, Fig. 1 (heat loss) and Fig. 2 (total liquid content) and also in Fig. 3 (deoiling/defatting ratio) and Fig. 4 (complex lipid concentration ratio).

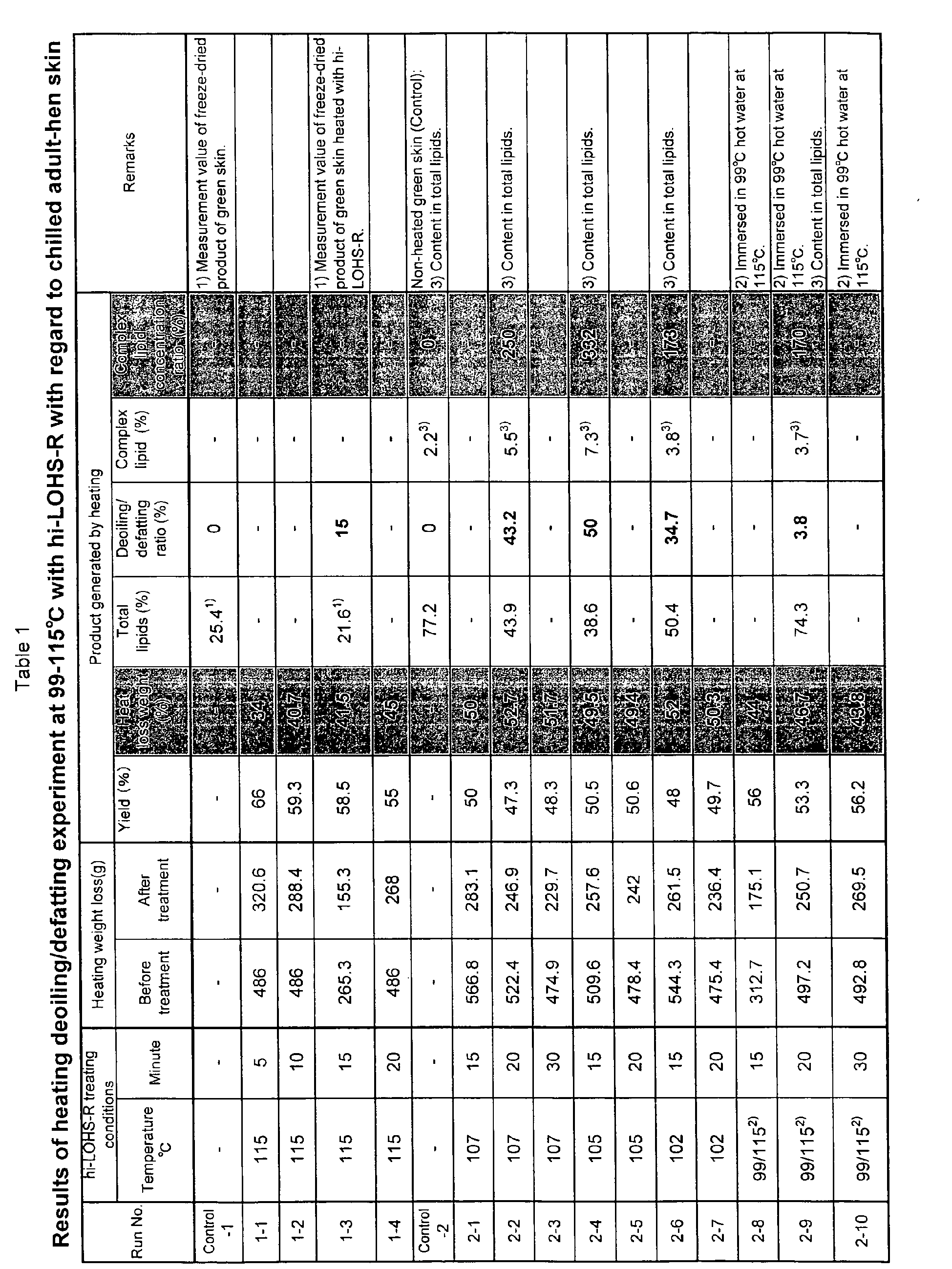

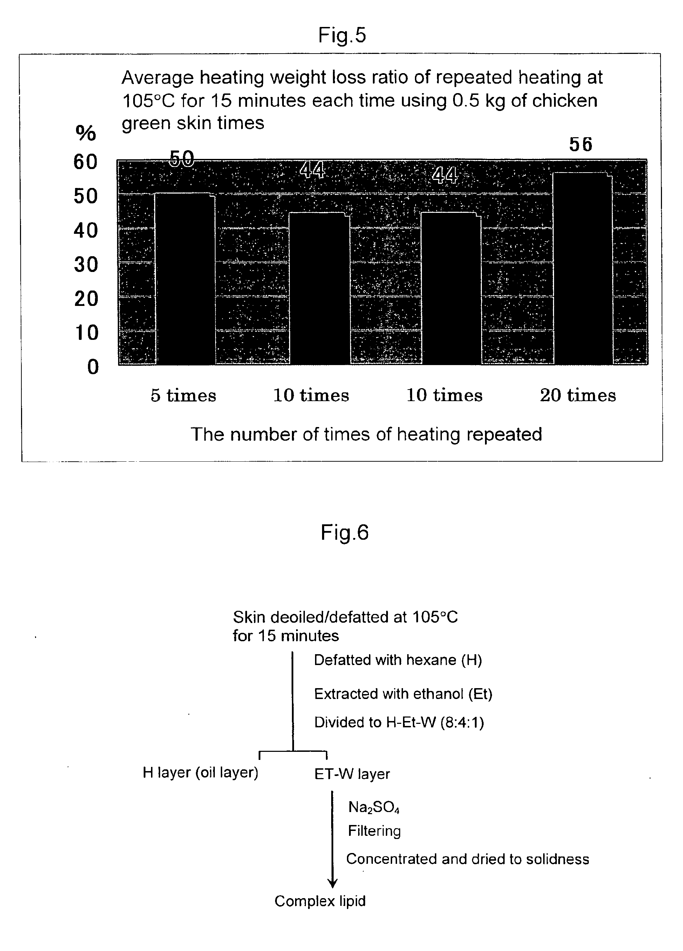

As a result of analysis of these, it was found that the preferred temperature range was 102 to 107°C, that the heating time period was 15 to 20 minutes, and that heating at 105°C for 15 minutes is the most preferred. The reproducibility of the most optimum conditions was tested, and as the results are shown in Fig. 5, the reproducibility was excellent.

### (3) Quality test of intended functional component of deoiled/defatted adult hen skin and separation test thereof

### (a) Quality test

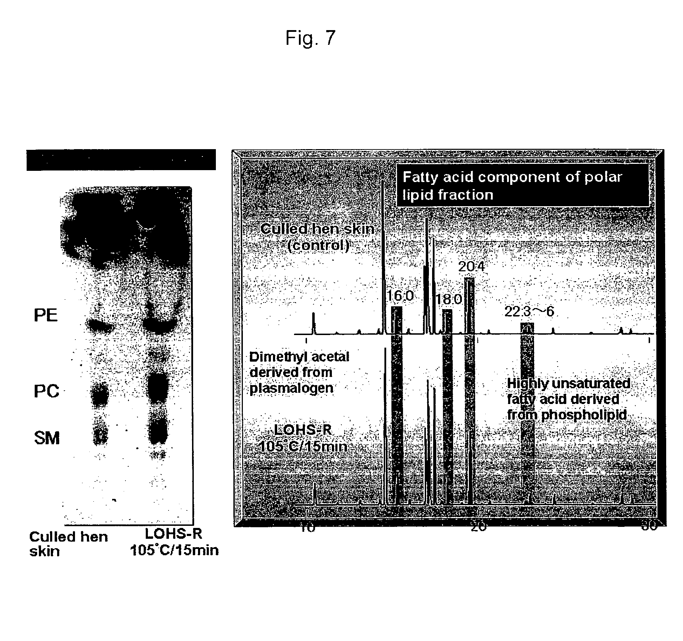

Quality tests of sphingomyelin (to be sometimes referred to as "SM" hereinafter) and plasmalogen (to be sometimes referred to as "PLL" hereinafter) as intended components were carried out with regard to green skin treated under the most optimum conditions. Chilled green skin (adult hen green skin that was subjected to the test of deoiling/defatting repeated five times shown in Fig. 5) was deoiled/defatted with hi-LOHS-R at 105°C for 15 minutes, and then complex lipid was obtained according to procedures shown in Fig. 6. This complex lipid fraction was subjected to thin-layer chromatography (TCL), and SM and PLL were qualitatively identified on the basis of their spotted position. (Explanations of terms in TLC chart in Fig. 7; PE: phosphatidylethanolamine mainly containing PLL, PC: phosphatidylcholine). Further, the above fraction was methanolysis-treated to be subjected to high-performance liquid chromatography (HPLC) The results are summarized in Fig. 7 (Explanation of terms in HPLC chart; 16:0: Saturated aliphatic hydrocarbon moiety having 16 carbon atoms, 18:0: Saturated aliphatic hydrocarbon moiety having 18 carbon atoms, 20:4: Fatty acids having 20 carbon atoms and having an unsaturation degree of 4, 22:3-6: Fatty acids having 22 carbon atoms and having an unsaturation degree of 3-6.). As a result, in the green skin deoiled/defatted by heating under the most optimum conditions, saturated linear aliphatic dimethyl acetals having 16 and 18 carbon atoms derived from SM and PLL and highly unsaturated fatty acids having 20 and 22 carbon atoms derived from phospholipids such as SM, etc., were observed with peak intensities equivalent or higher than those of a composite lipid fraction derived from unheated green skin, so that it was clearly shown that the intended two components were concentrated without suffering decomposition or alteration by the heat treatment.

### (b) Isolation test of SM and PLL intended components

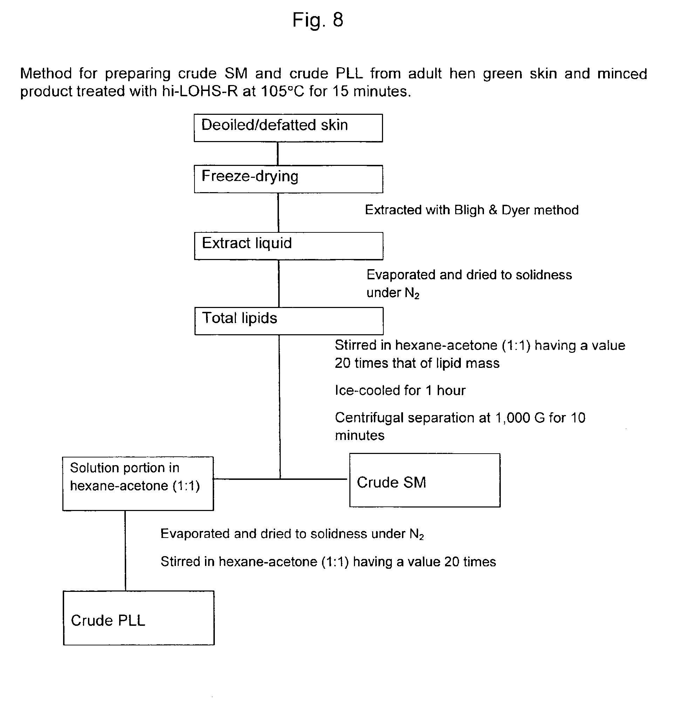

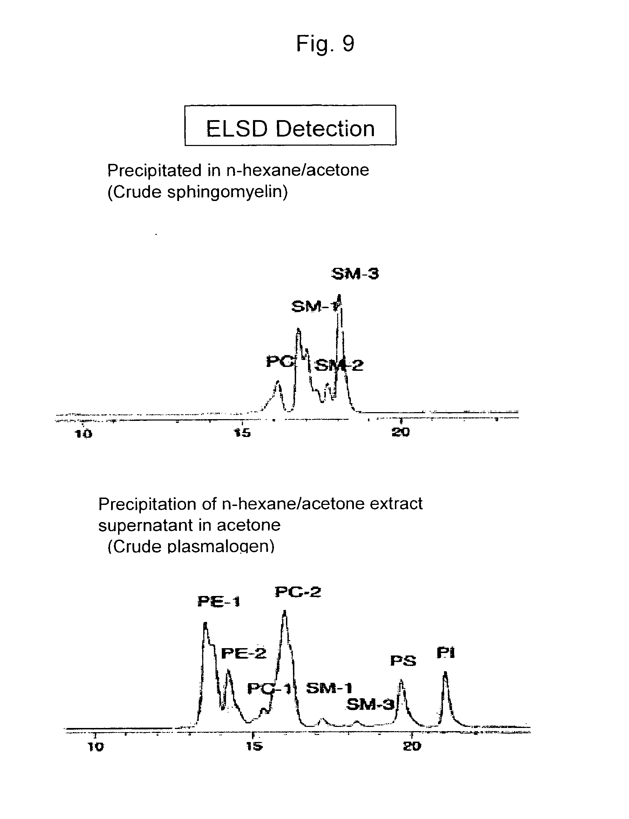

750 Grams of adult hen green skin that had been subjected to deoiling/defatting with hi-LOHS-R at 105°C for 15 minutes repeatedly five times shown in Fig. 5 was freeze-dried to prepare 320 g of a deoiled/defatted chicken skin powder, and solvent fractionation was carried out a total of 8 times using 40 g thereof each time according to procedures shown in Fig. 8. As a result, there were obtained, as an average of 8 times, 0.13 +0.02 g of crude SM [total 1.04 g (yield 0.14 mass%, based on adult hen green skin deoiled/defatted at 105°C for 15 minutes with hi-LOHS-R)], and 0.65 ±0.09 g of crude PLL [total 5.2 g (yield 0.69 mass%, based on adult hen green skin deoiled/defatted at 105°C for 15 minutes with hi-LOHS-R)]. As a result of normal phase HPLC separation/light scattering detection shown in Fig. 9, it was detected that the crude SM had a purity of 90 mass% and that the crude PLL had a purity of 40 mass%. Therefore, the net recoveries of SM and PLL based on the adult hen green skin deoiled/defatted at 105°C for 15 minutes with hi-LOHS-R were calculated to be 0.13 mass% and 0.26 mass%, respectively.

### (c) Storage stability

The initial general viable cell count of heated green skin obtained by heating it at 105°C for 15 minutes as the optimum conditions of this invention is a limit of detection or lower, and even after the heated green skin vacuum-packed with the high-barrier film was refrigerated for 1 month, the viable cell count thereof was also a limit of detection or lower, so that the present invention was proved to be excellent in storage stability.

Heated green skin obtained by heating it at 105°C for 15 minutes as the optimum conditions of this invention is easily dried by normal freeze-drying and pulverized, and when sealed, it is stable at room temperature for a long period of time.

### (4) Function to inhibit the fouling of an apparatus by heating with hi-LOHS-R

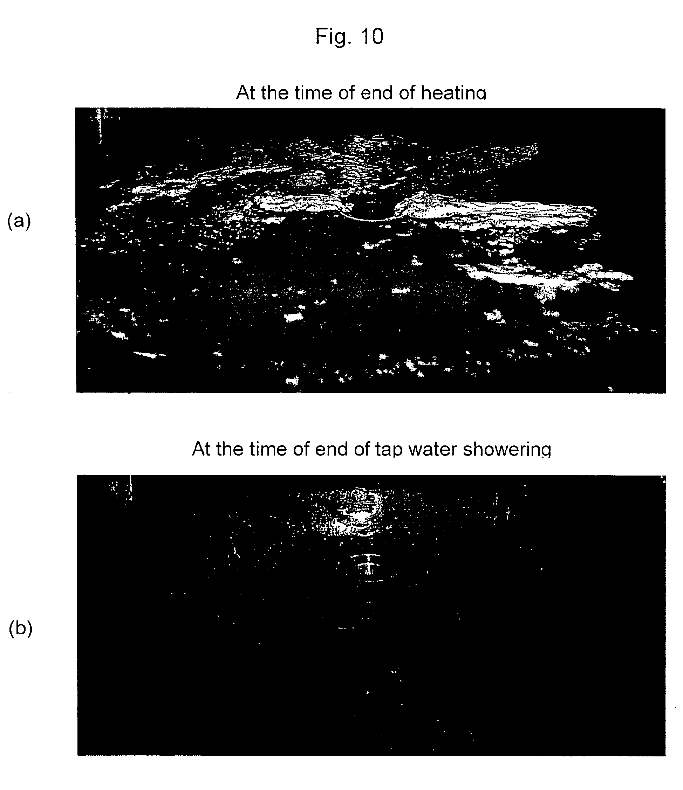

The heating technique of this invention has the action of preventing an apparatus from being foul, and it has been proved that the inside of the apparatus can be simply cleaned only by showering tap water after the above test is finished as shown in Fig. 10. Fig. 10(a) is a photograph of part of an apparatus after the heating according to the heating technique of this invention was finished, and Fig. 10(b) is a photograph of the above part after it was cleaned by showering tap water.

### Example 2

A deoiling/defatting test using 2.5 kg of chilled green skin minced frozen material of culled hen (adult hen) was carried out in place of the deoiling/defatting test using chilled green skin of culled hen (adult hen) in Example 1(2).

In this Example, the influence of a change in the form of adult hen green skin on the deoiling/defatting test by heating with hi-LOHS-R was studied.

Chilled green skin obtained from chilled poultry was used as a raw material, and minced product having a size of 8 mm was prepared in the same manner as in Example 1(1), vacuum-packed with a high-barrier film and frozen. The minced product frozen was placed in a refrigerator at 3°C overnight and then thawed to be used in the test.

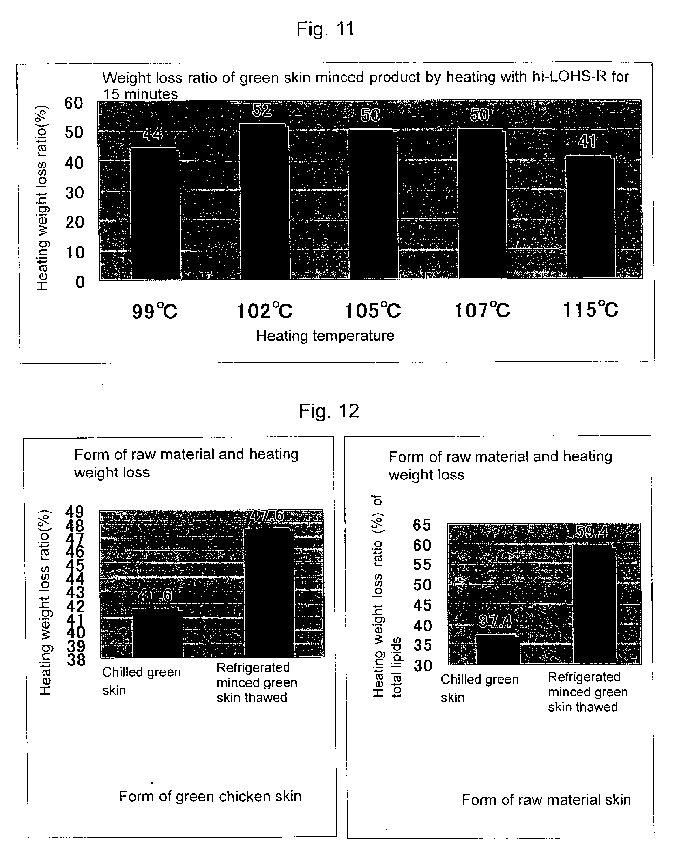

It was shown that the heating weight loss to each heating temperature had tendency similar to that of green skin as shown in Fig. 11, and that the optimum temperature range was 102 to 107°C.

As shown in Fig. 12, it was shown that when the form of raw material was changed from skin to minced skin, there was no large difference in heating weight loss but that the total lipids loss weight was remarkably improved.

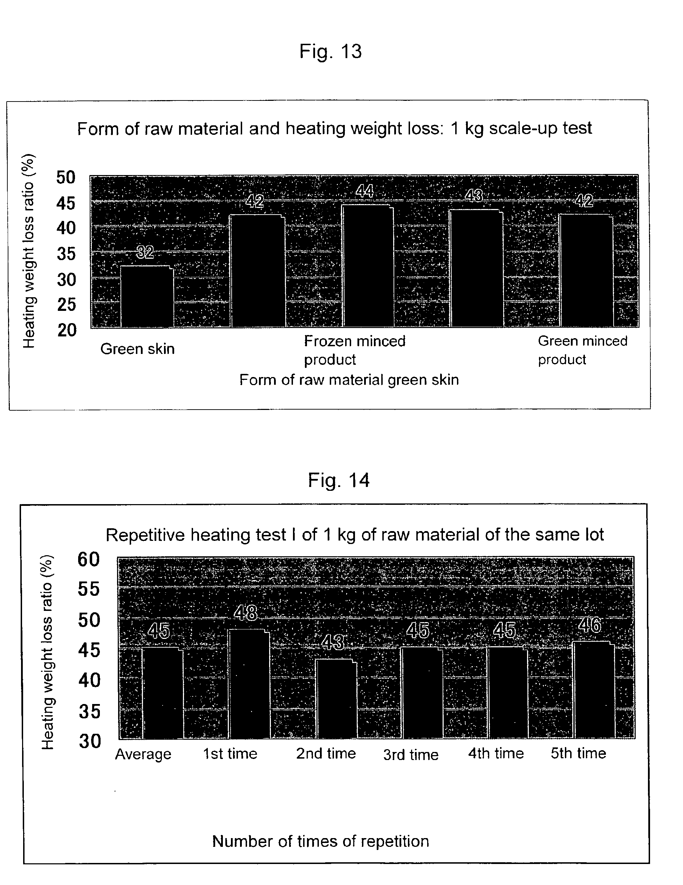

A scale-up test of heating at 105°C for 15 minutes as most optimum conditions was carried out for clearly showing reproducibility with regard to heating weight loss, and Fig. 13 shows the results. Reproducibility of superiority of the mincing was excellent.

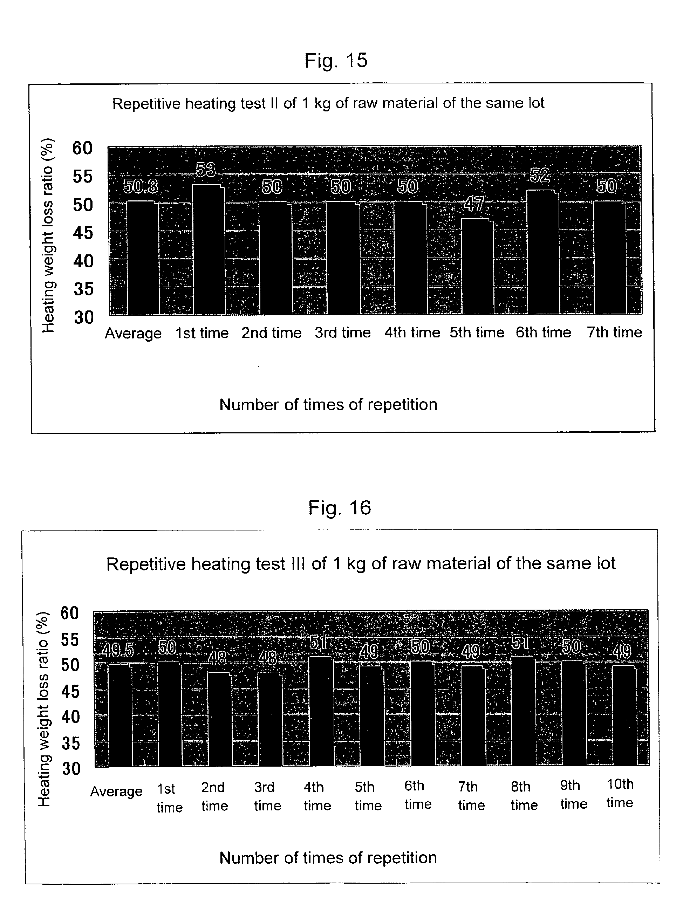

Further, Figs. 14 to 16 show results of scale-up (1 kg each) and repetitive tests of 3 lots of minced material prepared by thawing frozen minced product. Excellent reproducibility was exhibited in each test.

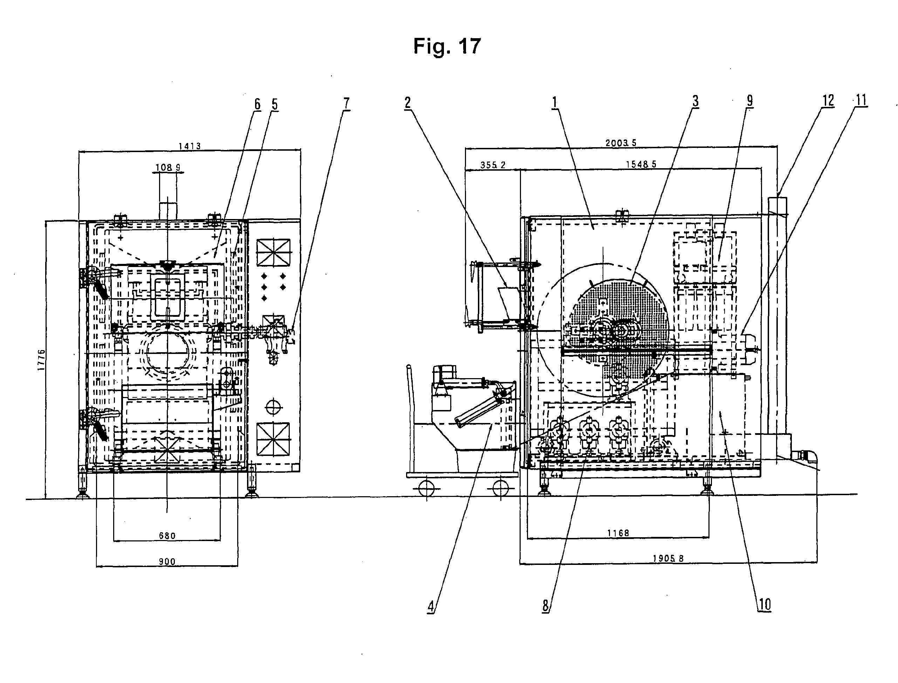

Fig. 17 shows a detail drawing of practical apparatus of the hi-LOHS-R prototype apparatus (4 kg/hour) used in Examples 1 and 2, and Table 2 shows the outline of its specification.

The explanation of symbols in Fig. 17 is as follows.
1. Heating chamber, 2. Material feed hopper, 3. Scroll mixer, 4. Processed material discharge dumper, 5. Steam generating heat accumulator panel, 6. Heat chamber temperature control heater, 7. Scroll mixer driving motor, 8. Electromagnetic metering pump, 9. Pure water producing apparatus, 10. Pure water reserve tank, 11. Stirring air blower, 12. Atmosphere open tube

**Table 2**

| Outer dimensions | W 1413mm×D 1906mm×ΩH 1776mm |
|---|---|
| Power source | 3-phase 200V(50/60Hz) |
| Power consumption | Electric heater 39.2kW Motor 2.95kW |
| Water supply | 50 liters/hr (Pure water treatment) |
| Processing capacity | 30kg/hr |
| Stirring rotation | 10-25 rpm |
| Raw material feeding device | Slidable feed hopper (Charge amount: 10 kg/each time) |
| Discharge device | Electrically powered dumper type hopper |
| Main material | SUS304 |
| Atmosphere open tube | ϕ114.3mm |

### Industrial Utility

According to the process for preparing a functional material, provided by this invention, there can be prepared functional materials such as heated/pasteurized food materials, etc., by efficiently heat-treating a skin portion of poultry, preferably chicken, to carry out deoiling/defatting, and concentrating and thereby pasteurizing human-type sphingomyelin and plasmalogen-type glycerophospholipid contained in the above skin portion.

## Claims

1. A process for preparing a functional material by heat-treating a skin portion of poultry to carry out deoiling and defatting and to concentrate and pasteurize human-type sphingomyelin and plasmalogen-type glycerophospholipid contained in said skin portion, said heat-treatment comprising the steps of
(A) continuously injecting hot water heated to 100°C or higher and/or steam into a heating chamber of a semi-sealed space having said temperature or higher, to generate water microdroplets and moist hot steam,
(B) replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature range of 100 to 115°C,
(C) injecting steam in a 100 % wet state to said gaseous water to stably form a composite heating medium composed of hot water, water microdroplets and steam, and
(D) applying continuous amplitude heating including a temperature difference of at least 10°C to the skin portion of poultry with said composite heating medium in an atmosphere having a temperature of 100 to 115°C and an oxygen concentration of 0.2 % by volume or less.

2. The process for preparing a functional material as recited in claim 1, wherein the poultry is chicken.

3. The process for preparing a functional material as recited in claim 1, wherein the functional material is a heated pasteurized food.

4. A functional material obtained by the process recited in any one of claims 1 to 3.

5. A continuous heat-treating apparatus which is an apparatus for preparing the functional material recited in claim 4 and comprises
(1) means of continuously injecting hot water heated to 100°C or higher and/or steam into a heating chamber of a semi-sealed space having said temperature or higher, to generate water microdroplets and moist hot steam,
(2) means of replacing air in said heating chamber with said water microdroplets and moist hot steam, to fill a gas component (gaseous water) that has a composition having a relative humidity of 95 % or more and an oxygen concentration of 0.2 % by volume or less and that is maintained in a temperature range of 100 to 115°C,
(3) means of injecting steam in a 100 % wet state to said gaseous water to stably form a composite heating medium composed of hot water, water microdroplets and steam, and
(4) means of applying continuous amplitude heating including a temperature difference of at least 10°C to the skin portion of poultry with said composite heating medium in an atmosphere having a temperature of 100 to 115°C and an oxygen concentration of 0.2 % by volume,

6. Human-type sphingomyelin isolated from the functional material recited in claim 4.

7. Plasmalogen-type glycerophospholipid isolated from the functional material recited in claim 4.
